# EUROPEAN PATENT APPLICATION

(11) **EP 4 186 359 A1**
(43) Date of publication of application: **31.05.2023**
(21) Application number: 21211453.2
(22) Date of filing: 30.11.2021
(51) Int. Cl.: A01K 1/01

(54) **SLURRY SCRAPER**

(71) Applicant: Guinan, Stephen, Birr County, Offaly (IE)
(72) Inventor: Guinan, Stephen, Birr County, Offaly (IE)
(74) Representative: Schütte, Gearoid

(57) **Abstract**

A slurry scraper vehicle (1) has a housing (2) mounted on a pair of independently driven drive wheels (3). A drive motor powered by a rechargeable battery is mounted within the housing (2) and is drivably connected to the wheels (3). A control unit mounted within the housing (2) is operable to control movement of the slurry scraper vehicle (1). A manure scraper (4) is mounted at a front of the housing (2) and is engagable with a floor over which the slurry scraper vehicle (1) travels in use. The manure scraper (4) has a semi-circular shape. Forward movement of the slurry scraper vehicle (1) gathers manure within a mouth (5) of the manure scraper (4).

## Description

### Introduction

This invention relates to a slurry scraper for removing manure from a floor of a livestock shed, barn or the like building.

### Background of the Invention

The invention is primarily concerned with robotic slurry scraper vehicles. A typical robotic slurry scraper vehicle has a housing mounted on a pair of independently driven drive wheels. A drive motor, which conveniently may be an electric motor, is mounted on the housing and drivably connected to each wheel. A control unit on the housing is operable to control movement of the vehicle across the floor along a preset course to clear manure from the floor. In some cases, the floor is a slatted floor mounted above a slurry tank to collect the manure. Alternatively, the floor may be a solid floor with slats provided over a slurry tank at one side of the floor to collect the manure.

In a known slurry scraper a manure scraper is mounted at a front of the vehicle which pushes manure across the floor ahead of the vehicle. An arcuate scraper is provided having a relatively shallow curve to collect the manure. A problem with this is that the scraper blade can sometimes catch in the openings in the slatted floor, causing the vehicle to stall. Typically, a technician is called out to reset the vehicle which may include re-programming the control unit to avoid the area of the floor where the vehicle tends to jam. This leads to a time delay in which the vehicle is not operational and also possibly to a somewhat less than optimum cleaning of the floor.

In addition, a front end of the vehicle is supported on the scraper blade. This holds the scraper blade in contact with the floor, however, the weight of the vehicle causes the scraper blade to deform, bending away from the direction of travel, causing a brushing action rather than a scraping action and puts strain on the running gear of the vehicle, again necessitating maintenance callouts.

The present invention is directed towards overcoming these problems.

### Summary of the Invention

According to the invention, there is provided a robotic slurry scraper vehicle for removing manure from a floor of a livestock shed, comprising:
a housing mounted on a pair of independently driven drive wheels,
a drive motor mounted on the housing and drivably connected to the wheels,
a control unit operable to control movement of the vehicle across the floor,
and a manure scraper mounted on the housing and engagable with the floor in use,
characterised in that the manure scraper has a semi-circular shape.

Advantageously, providing a manure scraper in a semi-circular floor engaging shape ensures there is no danger of the manure scraper jamming in slats in a slatted floor. Further, an increased quantity of manure can be collected in each pass of the vehicle.

In one embodiment of the invention, the manure scraper has a radius of curvature in the range of 190mm - 380mm.

In another embodiment of the invention, the manure scraper has a radius of curvature of about 367mm.

In a further embodiment, the manure scraper comprises a scraper blade of resilient material mounted between a pair of curved metal bands, namely an inner band and an outer band, forming a support frame for the scraper blade, the scraper blade projecting downwardly of the inner band and the outer band, the support frame being attached to a mounting frame for mounting the scraper blade on the housing.

In another embodiment, the scraper blade is mounted at a front of the housing and an associated counterbalance weight is mounted at a rear of the housing. This advantageously prevents deformation of the scraper blade in use due to the weight of the vehicle. Ideally, the scraper blade is held in contract with the floor with minimum force required to achieve an efficient scraping action as the scraper blade is moved across the floor. It provides weight distribution more effectively on the robotic scraper therefore resulting in greater overall performance of the vehicle and prolonging the life of the vehicle's running gear.

In another embodiment, the counterbalance weight has a connector for demountably securing the counterbalance weight on the housing.

In another embodiment, the connector comprises a hanger for hanging the counterbalance weight on the housing.

In another embodiment, the counterbalance weight is a block.

In another embodiment, the counterbalance weight is a metal plate.

In a further embodiment, the metal plate comprises an inner plate and an outer plate which overlaps a lower portion of the inner plate.

In another aspect, the invention provides a manure scraper for a robotic slurry scraper vehicle, the manure scraper comprising a scraper blade of resilient material mounted on a metal support frame and projecting downwardly therefrom, the scraper blade being of semi-circular shape.

In another aspect, the invention provides a counterbalance weight for mounting on a robotic slurry scraper vehicle and having a connector for mounting the counterbalance weight on the vehicle at an opposite end to a manure scraper of the vehicle. Thus, advantageously, it will be appreciated that the performance of an existing robotic slurry scraper vehicle can be improved by the addition of the counterbalance weight of the invention when retrofitted to the robotic slurry scraper vehicle.

### Brief Description of the Drawings

The invention will be more clearly understood from the following description of some embodiments thereof, given by way of example only, with reference to the accompanying drawings, in which:
Fig. 1 is a schematic plan view of a robotic slurry scraper vehicle according to the invention;
Fig. 2 is a rear perspective view of a slurry scraper of the slurry scraper vehicle shown in Fig. 1;
Fig. 3 is a front perspective view of the slurry scraper;
Fig. 4 is a perspective view of a counterbalance weight for mounting on a slurry scraper vehicle;
Fig. 5 is another perspective view of the counterbalance weight shown in Fig. 4;
Fig. 6 is a perspective view of a robotic slurry scraper vehicle with the counterbalance weight of Fig. 4 shown mounted thereon;
Fig. 7 is a detail perspective view showing a mounting connector for the counterbalance weight of Fig. 4 attached to the robotic slurry scraper vehicle shown in Fig. 6;
Fig. 8 is a perspective view of another counterbalance weight according to a further embodiment of the invention;
Fig. 9 is another perspective view showing the counterbalance weight of Fig. 8;
Fig. 10 is a perspective view showing a further counterbalance weight according to another embodiment alongside another robotic slurry scraper vehicle;
Fig. 11 is a perspective view showing a rear cover of the robotic slurry scraper vehicle shown in Fig. 10 removed;
Fig. 12 is a perspective view showing the counterbalance weight of Fig. 10 mounted within the rear cover of the robotic slurry scraper vehicle;
Fig. 13 is another perspective view showing the mounting of the counterbalance weight of Fig. 10 within the rear cover of the slurry scraper vehicle; and
Fig. 14 is a perspective view of the slurry scraper vehicle with the rear cover mounted thereon and carrying the counterbalance weight of Fig. 10 inside the rear cover.

### Detailed Description of the Preferred Embodiments

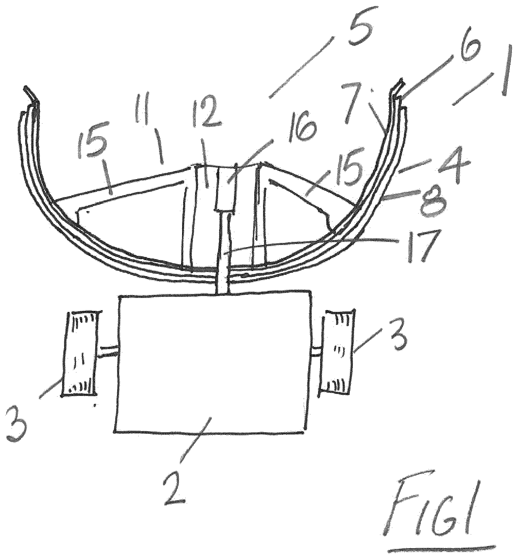

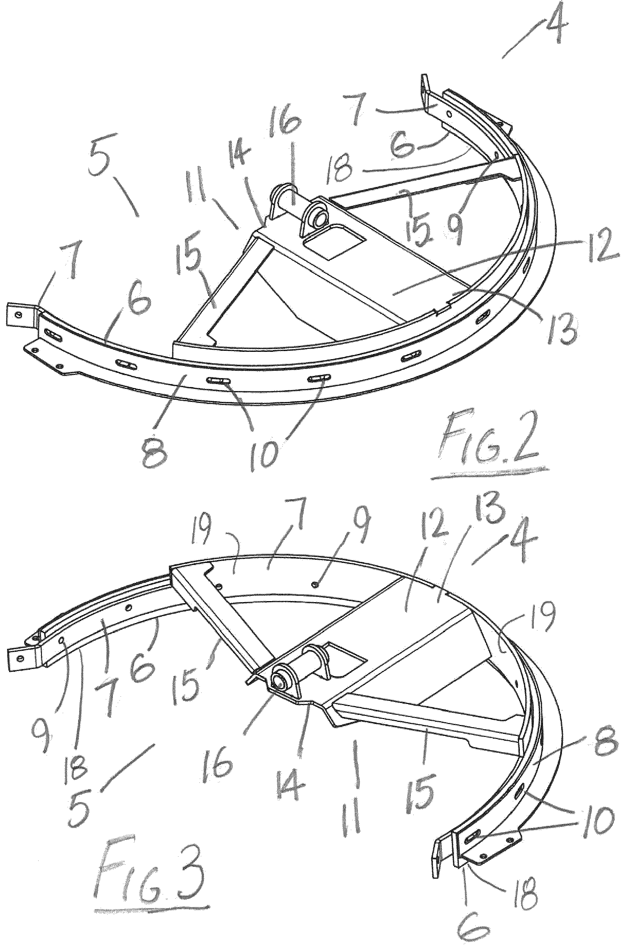

Referring to the drawings, and initially to Fig. 1 to Fig. 3 thereof, there is illustrated a robotic slurry scraper vehicle according the invention, indicated generally by the reference numeral 1. The slurry scraper vehicle 1 has a housing 2 mounted on a pair of independently driven drive wheels 3. A drive motor (not shown) is mounted within the housing 2 and is drivably connected to the wheels 3. A rechargeable battery (not shown) also mounted within the housing 2 and connected to the drive motor provides power for the drive motor. A control unit (not shown) mounted within the housing 2 is operable to control movement of the slurry scraper vehicle 1. A manure scraper 4 is mounted at a front of the housing 2 and is engagable with a floor over which the slurry scraper vehicle 1 travels in use. In accordance with the present invention the manure scraper 4 has a semi-circular shape. Forward movement of the slurry scraper vehicle 1 gathers manure within a mouth 5 of the manure scraper 4.

The manure scraper 4 comprises a scraper blade 6 of resilient material, such as silicone rubber material, clamped between a curved metal inner band 7 and a complementary curved metal outer band 8 which together form a support frame for the scraper blade 6. The scraper blade 6 has a lower edge 18 which projects downwardly of the inner band 7 and the outer band 8 for engaging a floor in use. It will be noted that the scraper blade 6 has a semi-circular or horse-shoe shape. This advantageously ensures that the scraper blade 6 cannot catch in openings in a slatted floor over which the scraper blade 6 is driven. Further, it resists any deformation of the scraper blade 6 as it is driven across a floor for collecting manure.

The inner band 7 has a plurality of spaced-apart through holes 9 for reception of mounting bolts (not shown) which engage through complementary through holes (not shown) in the scraper blade 6 and with associated elongate slots 10 in the outer band 8 for clamping the scraper blade 6 between the inner band 7 and the outer band 8.

A mounting frame 11 is attached to an upper end of the inner band 7. The mounting frame 11 has a central strut 12 having an inner end 13 connected to the inner band 7 and an outer end 14. Side struts 15 extend outwardly from the outer end 14 to an inner face 19 of the inner band 7. A mounting sleeve 16 at the outer end 14 is rotatably engagable with an associated forwardly projecting mounting shaft 17 on the slurry scraper vehicle 1 allowing pivoting of the scraper blade 6 about a longitudinal axis of the slurry scraper vehicle 1 in use to accommodate uneven floors.

In use, the manure scraper 4 is mounted at a front end of the slurry scraper vehicle1 as shown in Fig. 1. As the slurry scraper vehicle 1 moves forwardly, manure is collected within the mouth 5 formed by the inner band 7 and delivered to slots in the floor leading to a slurry tank.

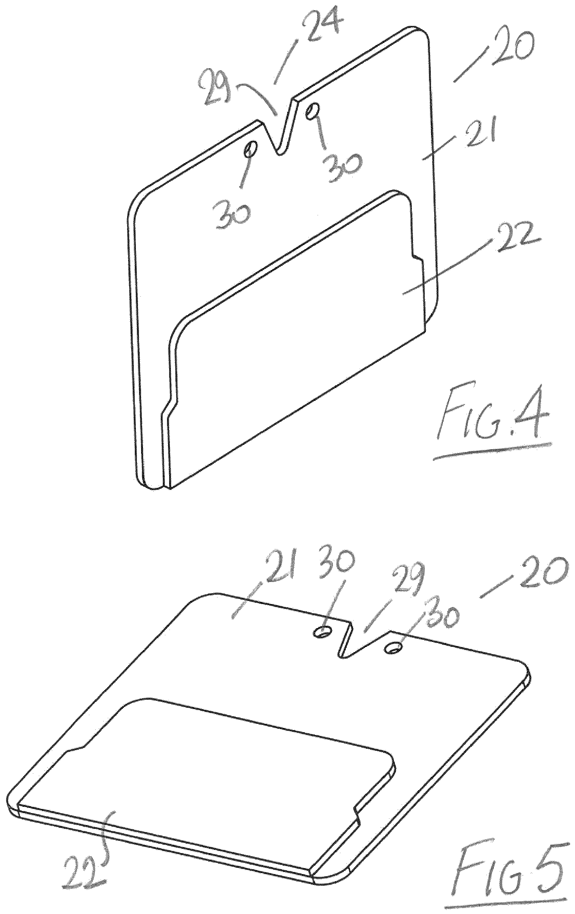

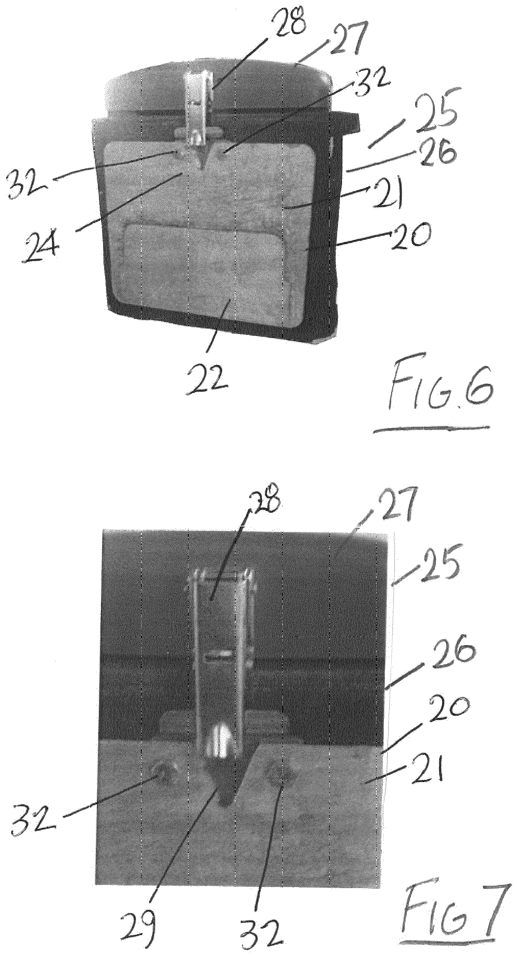

Referring now to Figs. 4 to 7, there is illustrated a counterbalance weight according to another aspect of this invention, indicated generally by the reference numeral 20. The counterbalance weight 20 may be retrofitted to existing slurry scraper vehicles or may be used in combination with the slurry scraper vehicle 1 described previously. The counterbalance weight 20 comprises an inner plate 21 and an outer plate 22 which overlap and are joined together. The outer plate 22 overlaps a lower portion of the inner plate 21. At a top of the inner plate 21, there is provided a connector 24 which facilitates attachment of the counterbalance weight 20 to a known type of robotic slurry scraper vehicle 25 as shown in Fig. 6 and Fig. 7. The slurry scraper vehicle 25 has a housing 26 with a cover 27 closed by a latch 28. In this case, the connector 24 has a V-notch 29 to accommodate the latch 28. Through holes 30 at opposite sides of the notch 29 receive mounting bolts 32 which secure the counterbalance weight 20 and a lower portion of the latch 28 to a rear wall of the housing 26.

The weight of the counterbalance weight 20 is typically in the range 4Kg to 14Kg and is selected to provide a counterbalance to the weight of the manure scraper 4 at a front of the housing 26 of the slurry scraper vehicle 25 such that scraper blade 6 of the manure scraper 4 rests on the floor in use with just sufficient force to maintain the scraper blade 6 in contact with the floor and scrape manure across the floor for deposition in a slurry pit.

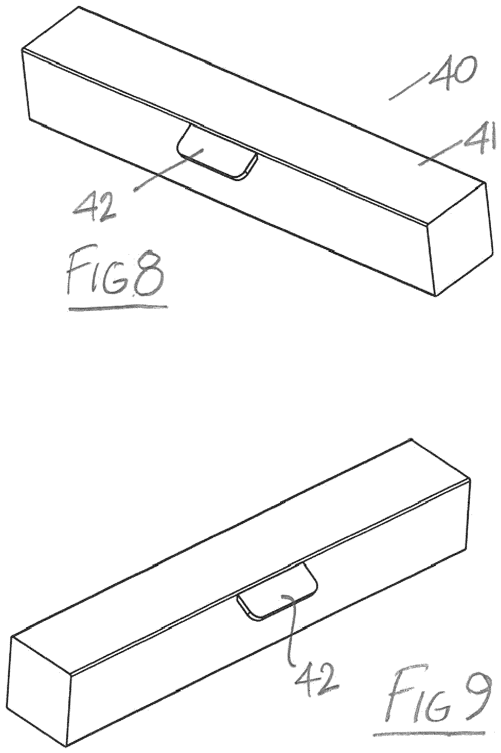

Referring now to Fig. 8 and Fig.9, there is shown another counterbalance weight according to a further embodiment of the invention, indicated generally by the reference numeral 40. In this case, the counterbalance weight 40 comprises a metal block 41 having a hanger 42 formed by a downwardly angled flap at a top edge of the metal block 41.

It is envisaged the counterbalance weight 40 could be formed in a number of different ways. For example, a reinforced concrete block or a metal outer sleeve filled with a concrete core might be provided. Another possibility is a hollow container, of plastics or metal, that is filled with water. This would allow adjustment of the counterbalance weight as well as being convenient to use.

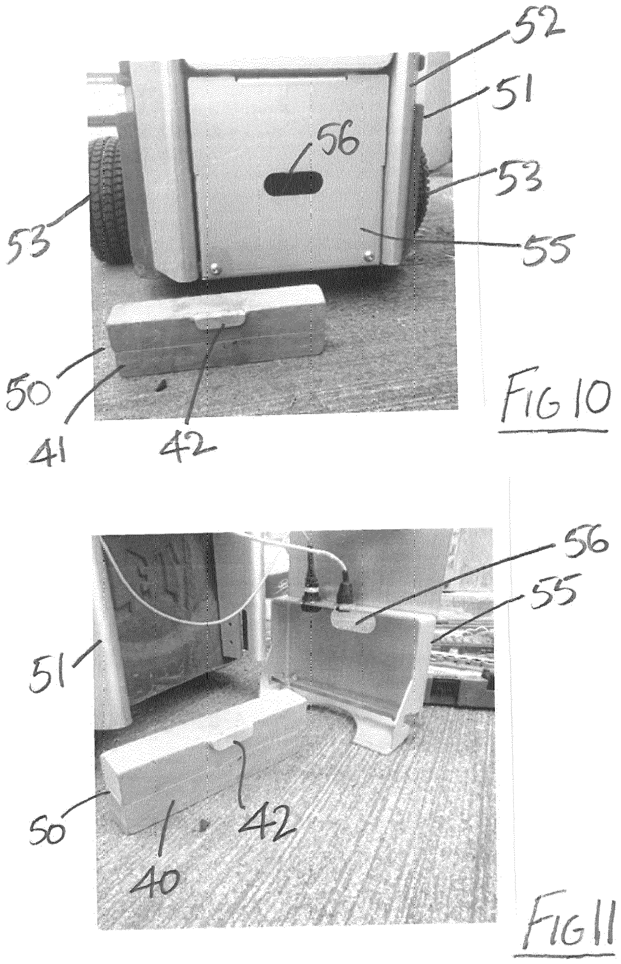

Referring now to Fig. 10 to Fig. 14, there is shown another counterbalance weight 50, according to another embodiment of the invention, for use with a robotic slurry scraper vehicle 51. Parts similar to those described previously are assigned the same reference numerals. This counterbalance weight 50 is largely similar to the counterbalance weight shown in Fig. 8 and Fig. 9. The slurry scraper vehicle 51 has a housing 52 mounted on a pair of independently driven drive wheels 53. A drive motor (not shown) is mounted within the housing 52 and is drivably connected to the wheels 53. A control unit (not shown) which is operable to control movement of the slurry scraper vehicle 51 across the floor is also housed within the housing 52.

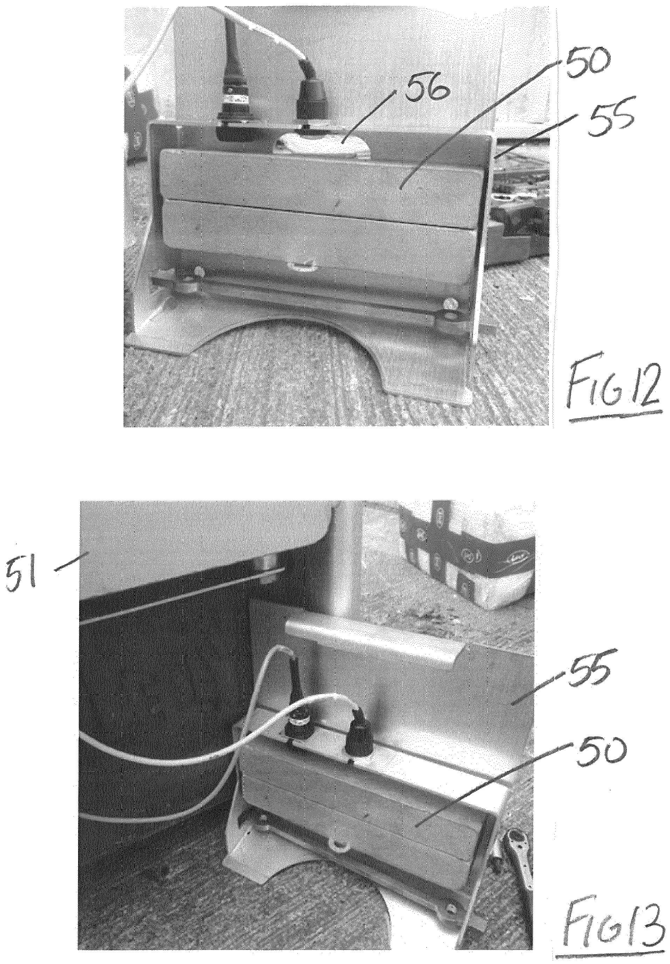

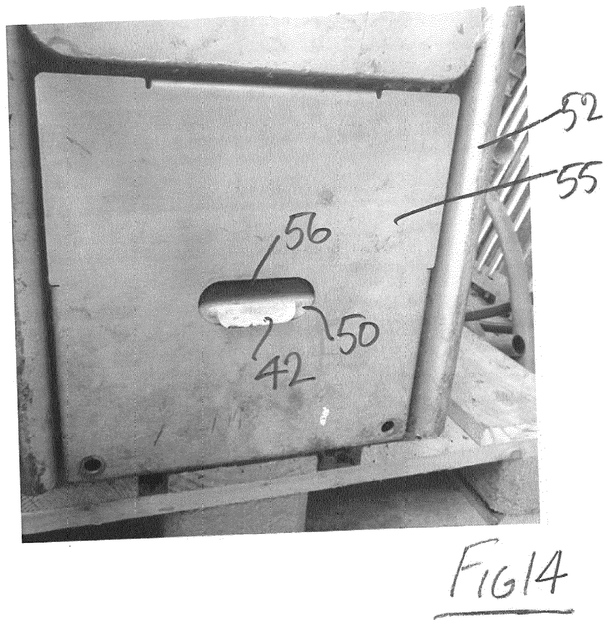

A rear panel 55 of the housing 52 is removable as shown in Fig. 11. This rear panel 55 has an opening 56. The counterbalance weight 50 can be mounted on an inside face of the rear panel 55 with the hook 42 of the counterbalance weight 50 engaging through the opening 56, as shown in Fig. 12 and Fig. 13. The rear panel 55 is again mounted on a rear of the housing 52, as shown in Fig. 14. The hanger 42 which extends through the opening 56 supports the counterbalance weight 50 on an inside face of the rear panel 55.

The counterbalance weight 50 typically has a weight range in the order of 4Kg to 14Kg. The weight is selected such that a scraper blade 6 at a front of the housing 52 is held just in contact with the floor in use.

In this specification the terms "comprise, comprises, comprised and comprising" or a variation thereof and the terms "include, includes, included and including" or any variation thereof are considered to be totally interchangeable and they should all be afforded the widest possible interpretation and vice versa.

The invention is not limited to the embodiments hereinbefore described which may be varied in both construction and detail within the scope of the appended claims.

## Claims

1. A robotic slurry scraper vehicle (1) for removing manure from a floor of a livestock shed, comprising:
a housing (2) mounted on a pair of independently driven drive wheels (3),
a drive motor mounted on the housing (2) and drivably connected to the wheels (3),
a control unit operable to control movement of the vehicle (1) across the floor,
and a manure scraper (4) mounted on the housing (2) and engagable with the floor in use,
**characterised in that** the manure scraper (4) has a semi-circular shape.

2. The slurry scraper vehicle (1) as claimed in claim 1, wherein the manure scraper (4) has a radius of curvature in the range of 190mm - 380mm.

3. The slurry scraper vehicle (1) as claimed in claim 2, wherein the manure scraper (4) has a radius of curvature of about 367mm.

4. The slurry scraper vehicle (1) as claimed in any one of the preceding claims, wherein the manure scraper (4) comprises a scraper blade (6) of resilient material mounted between a pair of curved metal bands, namely an inner band (7) and an outer band (8), forming a support frame for the scraper blade (6), the scraper blade (6) projecting downwardly of the inner band (7) and the outer band (8), the support frame being attached to a mounting frame (11) for mounting the scraper blade (6) on the housing (2).

5. The slurry scraper vehicle (1) as claimed in any one of the preceding claims, wherein the scraper blade (6) is mounted at a front of the housing (2) and an associated counterbalance weight (20, 40, 50) is mounted at a rear of the housing (2).

6. The slurry scraper vehicle (1) as claimed in claim 5, wherein the counterbalance weight (20, 40, 50) has a connector (29, 30, 42) for demountably securing the counterbalance weight (20, 40, 50) on the housing (2, 26, 52).

7. The slurry scraper vehicle (1) as claimed in claim 6, wherein the connector comprises a hanger (42) for hanging the counterbalance weight (20, 50) on the housing (26, 52).

8. The slurry scraper vehicle (1) as claimed in any one of the claims 5 to 7, wherein the counterbalance weight (40) is a block (41).

9. The slurry scraper vehicle (1) as claimed in any one of claims 5 to 7, wherein the counterbalance weight (20) is a metal plate (21, 22).

10. The slurry scraper vehicle (1) as claimed in claim 9, wherein the metal plate comprises an inner plate (21) and an outer plate (22) which overlaps a lower portion of the inner plate (21).

11. A manure scraper (4) for a robotic slurry scraper vehicle (1), the manure scraper (4) comprising a scraper blade (6) of resilient material mounted on a metal support frame (7, 8) and projecting downwardly therefrom, the scraper blade (6) being of semi-circular shape.

12. A counterbalance weight (20, 40, 50) for mounting on a robotic slurry scraper vehicle (1, 25, 51) and having a connector ((29, 30, 42) for mounting the counterbalance weight (20, 40, 50) on the vehicle (1, 25, 51) at an opposite end to a manure scraper (4) of the vehicle (1, 25, 51).
